# FASCICULE DE BREVET EUROPEEN

(11) **EP 4 402 023 B1**
(45) Date de publication et mention de la délivrance du brevet: **15.10.2025**
(21) Numéro de dépôt: 22773276.5
(22) Date de dépôt: 24.08.2022
(51) Int. Cl.: B60R 19/18, B60D 1/56, B60R 19/48

(54) **TRAVERSE DE PARE-CHOCS PRÉSENTANT DES AFFAIBLISSEMENTS AUTOUR D'UNE DOUILLE D'ARRIMAGE**
STOSSSTANGENQUERTRÄGER MIT SCHWÄCHUNGEN UM EINE VERANKERUNGSHÜLSE HERUM
BUMPER CROSS MEMBER WITH WEAKENING AROUND A TOWAGE BUSHING

(30) Priorité: 14.09.2021 FR 2109624
(43) Date de publication de la demande: 24.07.2024
(73) Titulaire: Stellantis Auto SAS, 78300 Poissy (FR)
(72) Inventeur: ROYER, Guillaume, 91680 BRUYERES LE CHATEL (FR); PERON, Rodolphe, 95220 HERBLAY (FR)
(74) Mandataire: BCIP
(86) Numéro de dépôt international: PCT/FR2022/051606
(87) Numéro de publication internationale: WO 2023/041858

(56) Documents cités:
- EP-A1- 2 025 560
- WO-A1-2007/084044
- WO-A1-2021/043899
- DE-A1- 102020 104 097
- DE-B3- 102015 101 435

## Description

Le domaine technique concerne les traverses de pare-chocs équipées de douille d'arrimage et les véhicules équipés de telles traverses.

En matière de sécurité routière, les constructeurs d'automobiles doivent prendre en compte de multiples préoccupations et réglementations lors du développement de nouveaux véhicules. En particulier, les constructeurs d'automobiles doivent assurer la sécurité des passagers du véhicule en cas de collision mais également protéger les autres usagers de la route les plus vulnérables tels que les piétons. Enfin il convient de chercher à maitriser les coûts de réparations des véhicules lorsqu'ils subissent des chocs urbains, dénommés chocs réparabilité, c'est-à-dire des chocs subis à de faibles vitesses de l'ordre de 15 à 20 kilomètres par heure. Les comportements des véhicules automobiles dans ces trois situations sont réglementés et testés en mettant en œuvre des procédures de tests normalisées. Les exigences en termes de résultats à ces tests sont toujours plus nombreuses et plus difficiles à satisfaire et obligent les constructeurs d'automobiles à innover constamment. Pour répondre aux exigences mentionnées précédemment, les constructeurs de véhicules automobiles ont ainsi développé des systèmes d'absorption de chocs, encore dénommés SAC, qui en règle générale comportent une poutre de pare-chocs reliée au châssis du véhicule, au moyens d'absorbeurs disposés entre la poutre de pare-chocs et un longeron. Le SAC et en particulier la poutre sont conçus pour se déformer en absorbant une partie de l'énergie libérée lors d'un choc, notamment un choc réparabilité.

Outre les réglementations et contraintes liées aux comportements en cas de chocs, la poutre de pare-chocs doit réglementairement comporter des moyens de fixation d'un crochet de remorquage. Par exemple, le document FR3074750 décrit de tels moyens mettant en œuvre une douille d'arrimage fixée en arrière de la poutre de pare-chocs, une ouverture dans la poutre de pare-chocs permettant le passage du crochet de remorquage. Or la fixation d'une douille d'arrimage sur une poutre de pare-chocs rigidifie considérablement la poutre de pare-chocs autour de la douille d'arrimage et augmente l'inertie autour de la douille du fait de l'ajout de matière.

Aussi, en cas de choc, notamment en cas de choc réparabilité, la déformation de la poutre n'est pas symétrique puisque la portion de la poutre autour de la douille d'arrimage, généralement positionnée près d'une extrémité de la poutre de pare-chocs, se déforme moins facilement du fait de sa rigidité accrue. La capacité de la poutre à absorber l'énergie n'est donc pas homogène. Cette inhomogénéité de la capacité d'absorption de la poutre représente un défaut de comportement préjudiciable en cas de choc réparabilité. Par ailleurs, les portions plus rigides peuvent représenter des zones susceptibles d'occasionner plus facilement des blessures aux piétons en cas de choc.

Enfin, dans le cas d'une poutre obtenue par extrusion et formant donc un profilé, il n'est pas toujours aisé de fixer la douille d'arrimage par manque d'espace disponible à cet effet. DE102015101435B3 montre une traverse de pare-chocs selon le préambule de la revendication 1.WO 2021/043899A1 montre une traverse avec une zone de fixation conçue pour permettre la fixation d'une douille d'arrimage, le caisson présentant dans la zone de fixation au moins un affaiblissement structurel.

La présente invention a pour objet de pallier les problèmes exposés précédemment. Dans ce contexte technique, un but de la présente invention est de fournir une traverse de pare-chocs permettant d'intégrer une douille d'arrimage tout en présentant une capacité d'absorption d'énergie homogène sur l'ensemble de la traverse.

A cet effet, la présente invention se rapporte à une traverse de pare-chocs pour un système d'absorption de chocs d'un véhicule automobile, avec les caractéristiques de la revendication 1, la traverse présentant au moins une zone de fixation conçue pour permettre la fixation d'une douille d'arrimage sur la traverse, la zone de fixation présentant un perçage pour la fixation d'un crochet de remorquage à travers le perçage dans la douille d'arrimage, la traverse présentant, au moins dans la zone de fixation, une partie centrale reliant deux caissons, le perçage étant ménagé au moins dans la partie centrale, au moins un caisson présentant dans la zone de fixation au moins un affaiblissement structurel conformé pour faciliter, en cas de choc réparabilité subi par la traverse, la déformation de la zone de fixation autour de la douille d'arrimage fixée sur la zone de fixation.

L'invention concerne également un véhicule équipé d'une traverse selon l'invention.

Ainsi, la traverse selon l'invention présente une forme particulière fréquemment utilisée et qui présente deux caissons destinés à absorber l'énergie d'un choc reliés par une partie centrale. La traverse selon l'invention présente une zone de fixation dans laquelle la douille d'arrimage peut être fixée. Chaque affaiblissement structurel ménagé dans la zone de fixation permet de compenser la rigidification occasionnée par la douille d'arrimage. Ainsi, en cas de choc réparabilité, les caissons affaiblis se déforment davantage dans la zone de fixation que le reste de la traverse. La traverse selon l'invention permet donc d'intégrer une douille d'arrimage tout en présentant une capacité d'absorption d'énergie homogène sur l'ensemble de la traverse.

La traverse est formée par extrusion de matière, et chaque caisson comporte une ouverture ménagée dans la zone de fixation formant un affaiblissement structurel.

Avantageusement, chaque ouverture présente un pourtour en forme de haricot ou de cacahuète.

Selon une possibilité, au moins un affaiblissement est constitué d'une déformation d'au moins un caisson de sorte à former un espace d'accueil pour la douille d'arrimage, l'espace d'accueil étant délimité en partie entre chaque déformation et la partie centrale. Ainsi, la formation d'un espace d'accueil permet de libérer de l'espace pour la douille d'arrimage.

Avantageusement, l'espace d'accueil présente un contour en forme de U ou de V suivant une section transversale de la traverse, les branches du U, respectivement du V, étant destinées à être orientées, lorsque la traverse est montée sur un véhicule, vers l'habitacle du véhicule.

Selon un mode de réalisation, au moins un affaiblissement est formé par mise en forme de la zone de fixation après extrusion de la traverse par l'application d'au moins une contrainte exercée sur le pourtour d'au moins une ouverture en vue de déformer le caisson correspondant dans la zone de fixation.

Selon une possibilité de l'invention, lorsque au moins un affaiblissement est constitué d'une déformation d'au moins un caisson de sorte à former un espace d'accueil pour la douille d'arrimage, l'espace d'accueil étant délimité en partie entre chaque déformation et la partie centrale, des contraintes sont exercées sur au moins deux ouvertures en vue d'éloigner les ouvertures l'une de l'autre et de former l'espace d'accueil.

Selon une possibilité, l'espace d'accueil présente une forme cylindrique ou tronconique dont la petite base est délimitée par la partie centrale de la traverse.

L'invention sera mieux comprise à la lecture de la description détaillée qui va suivre, donnée uniquement à titre d'exemple non limitatif et faite en se référant aux dessins annexés sur lesquels :
[Fig. 1] la figure 1, représente une vue en perspective et de la face arrière d'une zone de fixation d'une traverse selon l'invention ;
[Fig. 2] la figure 2, représente une vue de face de la zone de fixation de la figure 1.

Dans ces figures, les mêmes références sont utilisées pour désigner les mêmes éléments.

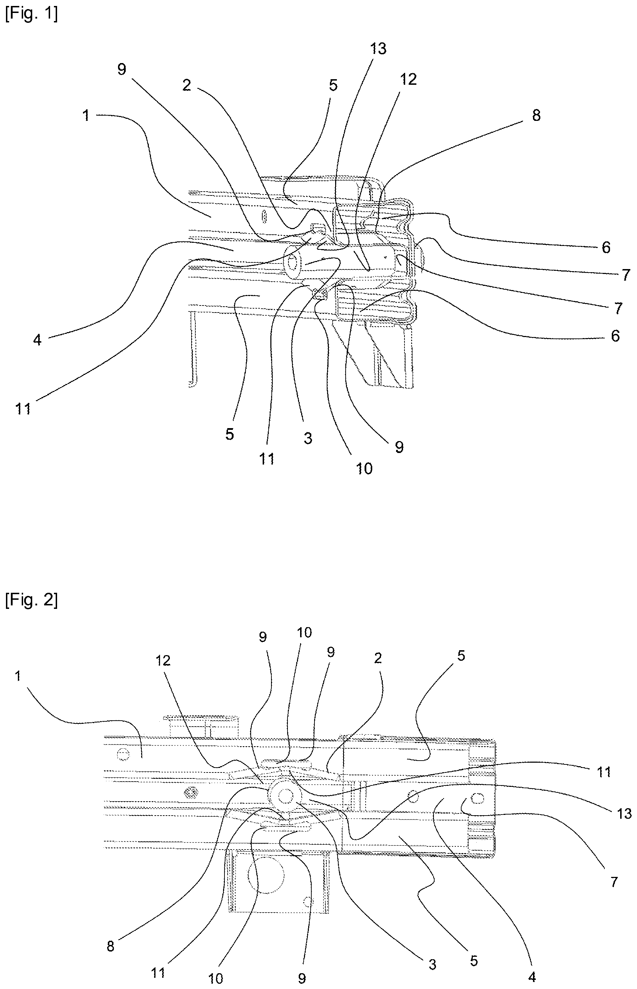

Une traverse 1 de pare-chocs, illustrée partiellement sur les figures, est destinée à être installé sur un châssis d'un véhicule selon l'invention par l'intermédiaire d'amortisseurs, pour former ainsi un système d'absorption de chocs. La traverse 1 est, par exemple, réalisée en métal, notamment en acier ou en alliage d'aluminium. La traverse 1 est, par exemple, obtenue par extrusion de matière et forme ainsi un profilé 2, comme illustré sur la figure 1.

La traverse 1 présente au moins une zone de fixation 2, visible sur les figures, conçue pour permettre la fixation d'une douille d'arrimage 3, illustrée sur les figures, sur la traverse 1, la douille d'arrimage 3 étant conçue pour arrimer un crochet de remorquage, non illustré. La fixation sur la traverse 1 de la douille d'arrimage 3 est avantageusement effectué par soudage.

Dans le mode de réalisation illustré sur les figures, la traverse 1 présente, au moins dans la zone de fixation 2, une partie centrale 4 reliant deux caissons 5 s'étendant chacun sur la longueur de la traverse 1. Les caissons 5 délimitent chacun un espace vide 6 globalement parallélépipédique, visibles sur la figure 1. Les caissons 5 sont conçus pour se déformer en cas de choc, notamment de choc réparabilité, afin d'absorber au moins une partie de l'énergie libérée lors du choc. La partie centrale 4 s'étend également le long de la traverse 1 entre deux faces 7 globalement planes, une face arrière destinée à faire face à l'habitacle du véhicule et une face avant, opposée à la face arrière.

Comme illustré sur les figures, la zone de fixation 2 présente un perçage 8 pour la fixation d'un crochet de remorquage, non illustré, à travers le perçage 8 dans la douille d'arrimage 3. Le perçage 8 est ménagé au moins dans la partie centrale 4. Dans l'exemple illustré sur les figures, le perçage 8 présente une forme circulaire dont le rayon est choisi pour permettre d'accommoder la douille d'arrimage 3 dans le perçage 8.

Dans la zone de fixation 2, les caissons 5 présentent des affaiblissements 9 structurels conformés pour faciliter une déformation de la zone de fixation 2 autour de la douille d'arrimage 3 fixée sur la traverse 1, lorsque la traverse 1 subit un choc, notamment un choc réparabilité.

Dans l'exemple illustré sur les figures, chaque affaiblissement 9 comporte au moins une ouverture 10 ménagée dans un caisson 5, dans la zone de fixation 2. Dans le mode de réalisation illustré sur les figures, les ouvertures 10 présentent un pourtour en forme de cacahuète ou de haricot, comme illustré sur la figure 2. Dans le mode de réalisation illustré sur les figures, au moins un affaiblissement 9 est constitué d'une déformation 11 d'au moins un caisson 5 de sorte à former un espace d'accueil 12 pour la douille d'arrimage 3. En l'occurrence, chaque caisson 5 présente une déformation 11 localisée autour de la douille d'arrimage 3.

L'espace d'accueil 12 est ainsi délimité en partie entre les déformations 11 et la partie centrale 4. L'espace d'accueil 12 présente, suivant une section transversale de la traverse au niveau de la douille d'arrimage 3, un contour en forme de U. Les branches du U sont destinées à être orientées, lorsque la traverse 1 est montée sur un véhicule, vers l'habitacle du véhicule. L'espace d'accueil 12 comporte une portion formant un cylindre 13 entre les déformations 11 et la partie centrale 4. Lorsque les caissons 5 sont distants l'un de l'autre, comme illustré sur les figures, l'espace d'accueil 12 se prolonge de part et d'autre de la zone de fixation 2 entre les caissons 5 et la partie centrale 4.

Afin d'obtenir les déformations 11, au moins un affaiblissement 9 est formé par mise en forme de la zone de fixation 2, après extrusion de la traverse 1, par l'application d'au moins une contrainte exercée sur le pourtour d'au moins une ouverture 10 en vue de déformer le caisson 5 correspondant dans la zone de fixation 2. Chaque contrainte est avantageusement exercée suivant un axe transversal de la traverse 1 orienté de haut en bas lorsque la traverse 1 est installée sur le véhicule. Avant l'application de la contrainte, l'ouverture 10 présente une forme oblongue, la forme finale de cacahuète ou de haricot de l'ouverture 10 résultant de la déformation 11 du caisson 5. Dans l'exemple illustré sur les figures, au moins deux contraintes sont exercées sur au moins deux ouvertures 10 en vue de les éloigner l'une de l'autre suivant l'axe transversal de la traverse 1 pour former l'espace d'accueil 12.

Ainsi, Les déformations 11 des caissons 5 permettent de libérer l'espace d'accueil 12 pour y fixer une douille d'arrimage 3. De plus, grâce à chaque affaiblissement 9 ménagé dans les caissons 5, La traverse 1 selon l'invention présente une capacité d'absorption d'énergie homogène sur l'ensemble de la traverse 1. L'invention ne se limite pas au mode de réalisation de la traverse décrit ci-avant, seulement à titre d'exemple, mais d'autres modes de réalisation peuvent être conçus par l'homme de métier sans sortir du cadre et de la portée de la présente invention.

## Revendications

1. Traverse (1) de pare-chocs pour un système d'absorption de chocs d'un véhicule automobile, la traverse (1) présentant au moins une zone de fixation (2) conçue pour permettre la fixation d'une douille d'arrimage (3) sur la traverse (1), la zone de fixation (2) présentant un perçage (8) pour la fixation d'un crochet de remorquage à travers le perçage (8) dans la douille d'arrimage (3), la traverse (1) présentant, au moins dans la zone de fixation (2), une partie centrale (4) reliant deux caissons (5), le perçage (8) étant ménagé au moins dans la partie centrale (4), **caractérisée en ce qu'**au moins un caisson (5) présent dans la zone de fixation (2) au moins un affaiblissement (9) structurel conformé pour faciliter, en cas de choc réparabilité subi par la traverse (1), la déformation de la zone de fixation (2) autour de la douille d'arrimage (3) fixée sur la zone de fixation (2), la traverse (1) étant formée par extrusion de matière, et **en ce que** chaque caisson (5) comporte une ouverture (10) ménagée dans la zone de fixation (2) formant un affaiblissement (9) structurel.

2. Traverse (1) selon la revendication 1, **caractérisée en ce que** chaque ouverture (10) présente un pourtour en forme de haricot ou de cacahuète.

3. Traverse (1) selon les revendications 1 ou 2, **caractérisée en ce que** au moins un affaiblissement (9) est constitué d'une déformation (11) d'au moins un caisson (5) de sorte à former un espace d'accueil (12) pour la douille d'arrimage (3), l'espace d'accueil (12) étant délimité en partie entre chaque déformation (11) et la partie centrale (4).

4. Traverse (1) selon la revendication 3, **caractérisée en ce que** l'espace d'accueil (12) présente un contour en forme de U ou de V suivant une section transversale de la traverse (1), les branches du U, respectivement du V, étant destinées à être orientées, lorsque la traverse est montée sur un véhicule, vers l'habitacle du véhicule.

5. Traverse (1) selon l'une des revendications 1 à 4, **caractérisée en ce que** au moins un affaiblissement (9) est formé par mise en forme de la zone de fixation (2) après extrusion de la traverse (1) par l'application d'au moins une contrainte exercée sur le pourtour d'au moins une ouverture (10) en vue de déformer le caisson (5) correspondant dans la zone de fixation (2).

6. Traverse (1) selon la revendication 5 en combinaison avec la revendication 4, **caractérisée en ce que** des contraintes sont exercées sur au moins deux ouvertures (10) en vue d'éloigner les ouvertures (10) l'une de l'autre et de former l'espace d'accueil (12).

7. Traverse (1) selon la revendication 6, **caractérisée en ce que** l'espace d'accueil (12) présente une forme cylindrique ou tronconique dont la petite base est délimitée par la partie centrale (4) de la traverse (1).

8. Véhicule équipé d'une traverse (1) selon l'une des revendications 1 à 7.

## Patentansprüche

1. Stoßfängerschwelle (1) für eine Stoßdämpfungseinrichtung eines Kraftfahrzeuges, wobei die Schwelle (1) mindestens einen Befestigungsbereich (2) zur Befestigung einer Spannhülse (3) an der Schwelle (1) aufweist, wobei der Befestigungsbereich (2) eine Bohrung (8) zur Befestigung eines Abschlepphakens durch die Bohrung (8) in der Spannhülse (3) aufweist, wobei die Schwelle (1) mindestens im Befestigungsbereich (2) einen Mittelteil (4) aufweist, der zwei Gehäuse (5) miteinander verbindet, wobei die Bohrung (8) mindestens im Mittelteil (4) ausgebildet ist, **dadurch gekennzeichnet, dass** mindestens ein im Befestigungsbereich (2) vorhandener Kasten (5) mindestens eine strukturelle Schwächung (9) aufweist, die ausgebildet ist, um im Falle eines von dem Querträger (1) erlittenen Reparaturaufpralls die Verformung des Befestigungsbereichs (2) um die am Befestigungsbereich (2) befestigte Befestigungshülse (3) zu erleichtern, wobei der Querträger (1) durch Materialextrusion gebildet ist, und dass jeder Kasten (5) eine im Befestigungsbereich (2) ausgebildete, eine Schwächung bildende Öffnung (10) aufweist (9) strukturell.

2. Querträger (1) nach Anspruch 1, **dadurch gekennzeichnet, dass** jede Öffnung (10) einen bohnen- oder erdnussartigen Umfang aufweist.

3. Schwelle (1) nach einem der Ansprüche 1 oder 2, **dadurch gekennzeichnet, dass** mindestens eine Schwächung (9) aus einer Verformung (11) mindestens eines Kastens (5) besteht, sodass ein Aufnahmeraum (12) für die Andockhülse (3) gebildet wird, wobei der Aufnahmeraum (12) teilweise zwischen jeder Verformung (11) und dem Mittelteil (4) begrenzt ist.

4. Querträger (1) nach Anspruch 3, **dadurch gekennzeichnet, dass** der Aufnahmeraum (12) eine U- oder V-förmige Kontur entlang eines Querschnitts des Querträgers (1) aufweist, wobei die Schenkel des U bzw. des V dazu bestimmt sind, bei an einem Fahrzeug montiertem Querträger zum Fahrzeuginnenraum hin ausgerichtet zu sein.

5. Schwelle (1) nach einem der Ansprüche 1 bis 4, **dadurch gekennzeichnet, dass** durch Verformen des Befestigungsbereiches (2) nach Extrudieren der Schwelle (1) durch Anlegen mindestens einer auf den Umfang mindestens einer Öffnung (10) ausgeübten Spannung zur Verformung des entsprechenden Kastens (5) im Befestigungsbereich (2) mindestens eine Schwächung (9) gebildet ist.

6. Querträger (1) nach Anspruch 5 in Kombination mit Anspruch 4, **dadurch gekennzeichnet, dass** auf mindestens zwei Öffnungen (10) Spannungen ausgeübt werden, um die Öffnungen (10) voneinander weg zu bewegen und den Aufnahmeraum (12) zu bilden.

7. Querträger (1) nach Anspruch 6, **dadurch gekennzeichnet, dass** der Aufnahmeraum (12) eine zylindrische oder kegelstumpfförmige Form aufweist, deren kleine Basis vom Mittelteil (4) des Querträgers (1) begrenzt ist.

8. Fahrzeug mit einer Quertraverse (1) nach einem der Ansprüche 1 bis 7.

## Claims

1. Bumper cross-member (1) for a motor vehicle shock absorbing system, the cross-member (1) having at least one fastening zone (2) designed to allow the fastening of a tie-down sleeve (3) on the cross-member (1), the fastening zone (2) having a hole (8) for the fastening of a towing hook through the hole (8) in the tie-down sleeve (3), the cross-member (1) having, at least in the fastening zone (2), a centre part (4) connecting two caissons (5), the hole (8) being provided at least in the central part (4), **characterised in that** at least one box (5) presnt in the fixing zone (2) at least one structural weakening (9) shaped to facilitate, in the event of a reparable impact to which the cross-member (1) is subjected, the deformation of the fixing zone (2) around the securing bush (3) fixed to the fixing zone (2), the cross-member (1) being formed by extrusion of material, and **in that** each box (5) comprises an opening (10) provided in the fixing zone (2) forming a weakening (9) structural.

2. Cross-member (1) according to claim 1, **characterised in that** each opening (10) has a bean or groundnut-shaped periphery.

3. Crossmember (1) according to either of Claims 1 and 2, **characterised in that** at least one weakening (9) consists of a deformation (11) of at least one box (5) so as to form a receiving space (12) for the securing bush (3), the receiving space (12) being delimited in part between each deformation (11) and the central part (4).

4. Crossmember (1) according to claim 3, **characterised in that** the receiving space (12) has a U- or V-shaped contour along a cross section of the crosspiece (1), the branches of the U, respectively of the V, being intended to be orientated, when the crosspiece is mounted on a vehicle, towards the passenger compartment of the vehicle.

5. Crossmember (1) according to one of Claims 1 to 4, **characterised in that** at least one weakening (9) is formed by shaping the fixing zone (2) after extrusion of the crosspiece (1) by the application of at least one constraint exerted on the periphery of at least one opening (10) with a view to deforming the corresponding box (5) in the fixing zone (2).

6. Crossmember (1) according to claim 5 in combination with claim 4, wherein constraints are exerted on at least two openings (10) in order to move the openings (10) away from one another and to form the receiving space (12).

7. Cross-member (1) according to claim 6, **characterised in that** the receiving space (12) has a cylindrical or frustoconical shape, the small base of which is delimited by the central part (4) of the cross-member (1).

8. Vehicle equipped with a cross-member (1) according to one of claims 1 to 7.
